# EUROPEAN PATENT APPLICATION

(11) **EP 3 260 824 A1**
(43) Date of publication of application: **27.12.2017**
(21) Application number: 17171183.1
(22) Date of filing: 15.05.2017
(51) Int. Cl.: G01F 23/284, H01Q 1/22, H01Q 13/02

(54) **RADAR LEVEL GAUGE SYSTEM WITH MODULAR PROPAGATION DEVICE**

(30) Priority: 23.06.2016 US 201615190287
(71) Applicant: Rosemount Tank Radar AB, 435 23 Mölnlycke (SE)
(72) Inventor: Fredriksson, Håkan, 589 51 Linköping (SE); Elmberg, Peter, 437 38 Lindome (SE)
(74) Representative: Kransell & Wennborg KB

(57) **Abstract**

A radar level gauge system for determining the filling level of a product in a tank, comprising a transceiver, an elongated propagation device, and processing circuitry coupled to the transceiver for determining the filling level. The propagation device comprises a first propagation device part comprising a cuff portion; and a second propagation device part comprising an end portion inserted in the cuff portion and joined together with the cuff portion by at least a first fastening arrangement. The first fastening arrangement comprises: a tab formed in one of the cuff portion and the end portion; and a recess formed in the other one of the cuff portion and the end portion. The tab is received by the recess to interact with the recess to prevent relative movement between the first propagation device part and the second propagation device part at least in the longitudinal direction.

## Description

### Technical Field of the Invention

The present invention relates to a radar level gauge system and to a method of installing a radar level gauge system at a tank.

### Technical Background

Radar level gauge (RLG) systems are in wide use for determining the filling level of a product contained in a tank. Radar level gauging is generally performed either by means of non-contact measurement, whereby electromagnetic signals are radiated towards the product contained in the tank, or by means of contact measurement, often referred to as guided wave radar (GWR), whereby electromagnetic signals are guided towards and into the product by a transmission line probe acting as a waveguide. The probe is generally arranged to extend vertically from the top towards the bottom of the tank.

An electromagnetic transmit signal is generated by a transceiver and propagated towards the surface of the product in the tank, and an electromagnetic reflection signal resulting from reflection of the transmit signal at the surface is propagated back towards to the transceiver.

Based on a relation between the transmit signal and the reflection signal, the distance to the surface of the product can be determined.

Radar level gauge systems are ubiquitous in application areas involving handling, shipping and storing of products as well as, for example, in the chemical process industry.

A radar level gauge system is often mounted on a so-called nozzle at the top of the tank. (The nozzle may typically be a pipe that is welded to the tank and fitted with a flange at its upper end to allow attachment of an instrument, such as a radar level gauge system, or a blind flange. The inner diameter of the nozzle may typically be between 0.1 and 0.2 m, and a typical length may be around 0.5 m.)

To prevent the nozzle from influencing non-contacting filling level measurements, it is desirable for the antenna (such as cone antenna or horn antenna) to extend to the lower end of the nozzle.

Nozzles are, however, not standardized and different tanks may have nozzles of different lengths, requiring different antenna dimensions.

So far, this issue has been addressed through the manufacture of customized antennas, such as by welding an extension pipe of suitable length to the antenna supplied together with the radar level gauge system. This may, however, be a relatively costly and time-consuming procedure, which may involve relatively difficult seam welding due to the thin material in the walls of the antenna and extension pipe.

Also for radar level gauge systems with other types of propagating devices, such as various transmission line probes, it may be desirable to facilitate adaptation to the tank at which the radar level gauge system should be installed.

### Summary of the Invention

In view of the above, a general object of the present invention is to provide an improved radar level gauge system. In particular, it would be desirable to provide for facilitated adaptation of a radar level gauge system to the properties and/or dimensions of the tank at which the radar level gauge system should be installed.

According to a first aspect of the present invention, it is therefore provided a radar level gauge system for determining the filling level of a product in a tank, comprising: a transceiver for generating, transmitting and receiving electromagnetic signals; an elongated propagation device connected to the transceiver for propagating an electromagnetic transmit signal in a longitudinal direction of the propagation device towards a surface of the product and for returning an electromagnetic reflection signal resulting from reflection of the electromagnetic transmit signal at the surface back towards the transceiver; and processing circuitry coupled to the transceiver for determining the filling level based on a relation between the transmit signal and the reflection signal, wherein the propagation device comprises: a first propagation device part comprising a cuff portion; and a second propagation device part comprising an end portion inserted in the cuff portion of the first propagation device part and joined together with the cuff portion by at least a first fastening arrangement, wherein the first fastening arrangement comprises: a tab formed in one of the cuff portion of the first propagation device part and the end portion of the second propagation device part; and a recess formed in the other one of the cuff portion of the first propagation device part and the end portion of the second propagation device part, the tab being received by the recess to interact with the recess to prevent relative movement between the first propagation device part and the second propagation device part at least in the longitudinal direction.

The "transceiver" may be one functional unit capable of transmitting and receiving electromagnetic signals, or may be a system comprising separate transmitter and receiver units.

It should be noted that the processing circuitry may be provided as one device or several devices working together.

The electromagnetic transmit signal may advantageously be a microwave signal. For instance, the transmit signal may be frequency and/or amplitude modulated on a carrier in the microwave frequency range.

The cuff portion of the first propagation device part may be arranged at an open end of the first propagation device part.

The "tab" is an elongated piece of material that can be angled or bent. The tab may also be referred to as an elongated tongue of material.

Moreover, the recess may be a blind hole or a through-going hole in the cuff portion or the end portion. The recess may advantageously be shaped and dimensioned to accommodate the tab. For example, the outline of the recess may be a scaled (slightly enlarged) replica of the outline of the tab.

In embodiments of the radar level gauge system according to the present invention, the propagation device may be a radiating antenna, such as a cone antenna or a horn antenna. These embodiments, for instance, provide for facilitated installation of the radar level gauge system at a tank having a tubular mounting structure (often referred to as "nozzle") extending vertically upwards from the roof of the tank. Following a simple measurement of the length of the nozzle, an antenna extension part can be selected among a set of antenna extension parts of different lengths, or a long antenna extension part can be shortened based on the measurement. Thereafter the selected or customized antenna extension part can be attached to the original antenna of the radar level gauge system without the need for welding or special tools. This will facilitate installation of the radar level gauge system, and provides for a reduction in the installation time, which in turn saves installation cost and facilitates installation planning.

In other embodiments of the radar level gauge system according to the present invention, the propagation device may be a coaxial transmission line probe. These embodiments, for instance, provide for facilitated delivery and installation of the radar level gauge system. The outer conductor of the coaxial transmission line probe may be provided in propagation device parts, each having a cuff portion and an end portion configured to be received by a cuff portion of another propagation device part. Hereby, the coaxial transmission line probe can be transported and delivered in parts and easily assembled on site. As for the above-described antenna embodiments, different lengths may be provided and/or one or several propagation device parts may be shortened on site.

Also these embodiments of the present invention will facilitate installation of the radar level gauge system, and provide for a reduction in the installation time, which in turn saves installation cost and facilitates installation planning.

According to various embodiments of the present invention, the tab may be an integral portion of one of the cuff portion of the first propagation device part and the end portion of the second propagation device part.

Furthermore, the tab may extend along a periphery of the propagation device.

According to various embodiments, the radar level gauge system of the invention may further comprise a second fastening arrangement, peripherally spaced apart from the first fastening arrangement. This will facilitate secure mechanical connection between the first and second propagation device parts.

The second fastening arrangement may advantageously comprise a tab formed in one of the cuff portion of the first propagation device part and the end portion of the second propagation device part; and a recess formed in the other one of the cuff portion of the first propagation device part and the end portion of the second propagation device part, the tab being received by the recess to interact with the recess to prevent relative movement between the first propagation device part and the second propagation device part at least in the longitudinal direction.

According to embodiments, the tab comprised in the first fastening arrangement may extend along the periphery of the propagation device in a first peripheral direction; and the tab comprised in the second fastening arrangement may extend along the periphery of the propagation device in a second peripheral direction, different from the first peripheral direction.

Different peripheral directions of the first and second tabs (and the corresponding recesses) may facilitate the correct joining of the propagation device parts. Furthermore, rotation of the propagation device parts in relation to each other can be prevented, or at least restricted.

According to various embodiments, the radar level gauge system of the invention may further comprise a third fastening arrangement, including: a tab formed in one of the cuff portion of the first propagation device part and the end portion of the second propagation device part; and a recess formed in the other one of the cuff portion of the first propagation device part and the end portion of the second propagation device part, the tab being received by the recess to interact with the recess to prevent relative movement between the first propagation device part and the second propagation device part at least in the longitudinal direction, wherein: the tab comprised in the third fastening arrangement extends along the periphery of the propagation device in the first peripheral direction.

The first and third fastening arrangements may advantageously be peripherally spaced apart and the first direction may be substantially perpendicular to the longitudinal direction.

To minimize the influence of the fastening arrangements on the signal propagation through the elongated propagation device, each of the tab comprised in the first fastening arrangement, and the tab comprised in the second fastening arrangement may be formed in the end portion of the second propagation device part.

The second propagation device part may advantageously be arranged between the transceiver and the second propagation device part.

Moreover, in non-contacting radar level gauging embodiments in which the propagation device is an antenna, the second antenna part may comprise a first portion exhibiting an increasing cross-sectional area with increasing distance in the longitudinal direction from the transceiver, and a second portion exhibiting a substantially constant cross-sectional area along a longitudinal extension of the second portion, the first portion being located between the transceiver and the second portion. For instance, the second antenna part may thus be a cone antenna with a cylindrical end portion.

The first antenna part may be provided as an antenna extension part, and may exhibit a substantially constant cross-sectional area along a longitudinal extension of the first antenna part. In the cuff portion of the first antenna part, the inner cross-sectional area may, however, be locally enlarged to allow the cuff portion to receive and accommodate the end portion of the second antenna part. Accordingly, the inner diameter of the first antenna part (having a circular cross-section) in the cuff portion may be slightly larger than the outer diameter of the second antenna part (having a circular cross-section). The inner diameter of the first antenna part outside the cuff portion may be substantially equal to the inner diameter of the second antenna part in the end portion thereof.

According to a second aspect of the present invention, it is provided a method of installing a radar level gauge system at a tank having a tubular mounting structure extending vertically upwards from a roof of the tank, the method comprising the steps of: providing a radar level gauge system including a transceiver for generating, transmitting and receiving electromagnetic signals; and an antenna for radiating electromagnetic signals transmitted by the transceiver; measuring a distance indicative of a distance from a top end of the tubular mounting structure to a potential source of a disturbance echo; determining a desired total antenna length based on the measured distance, the desired total antenna length being such that the disturbance echo is substantially eliminated; determining a desired antenna extension length based on the desired total antenna length and a length of the antenna comprised in the radar level gauge system; providing an antenna extension having the desired antenna extension length; attaching the antenna extension to the antenna of the radar level gauge system to form an extended antenna; and mounting the radar level gauge system, with the extended antenna, on the top end of the tubular mounting structure.

The above-mentioned potential source of a disturbance echo may element in the tank that may result in a disturbance echo close to the ceiling of the tank. For instance, the lower end of the tubular mounting structure may be such a potentially disturbing source, due to the abrupt impedance change at the lower end of the tubular mounting structure. Other examples of disturbing sources may include other metal structures in the tank, such as beams, inlets, heaters, agitators etc.

For instance, the desired total antenna length may thus be such that the end of the extended antenna protrudes from the tubular mounting structure, towards an interior of the tank.

In various embodiments of the method according to the present invention, the step of attaching may comprise the steps of partially inserting one of the antenna and the antenna extension into the other one of the antenna and the antenna extension to provide an overlapping portion in which the antenna and the antenna extension overlap; and deforming one of the antenna and the antenna extension in the overlapping portion to interlock the antenna and the antenna extension through the deformation.

Advantageously, one of the antenna and the antenna extension may comprise a tab in the overlapping portion, and the other one of the antenna extension may comprise a recess in the overlapping portion; and the step of deforming may comprise bending the tab in such a way that the tab is received by the recess.

Before bending the tab, the antenna extension may be moved in relation to the antenna to align the tab and the recess. For instance, the antenna extension may be rotated in relation to the antenna.

The steps of various methods according to the present invention need not necessarily take place in the order mentioned in the claims, but may take place in a different order unless a particular sequence is explicitly or implicitly indicated as being necessary. Furthermore, it may be possible to carry out several steps simultaneously.

Further effects and variations of the present second aspect of the invention are largely similar to those described above with reference to the first aspect of the invention.

In summary, the present invention thus relates to a radar level gauge system for determining the filling level of a product in a tank, comprising a transceiver, an elongated propagation device, and processing circuitry coupled to the transceiver for determining the filling level. The propagation device comprises a first propagation device part comprising a cuff portion; and a second propagation device part comprising an end portion inserted in the cuff portion and joined together with the cuff portion by at least a first fastening arrangement. The first fastening arrangement comprises: a tab formed in one of the cuff portion and the end portion; and a recess formed in the other one of the cuff portion and the end portion. The tab is received by the recess to interact with the recess to prevent relative movement between the first propagation device part and the second propagation device part at least in the longitudinal direction.

### Brief Description of the Drawings

These and other aspects of the present invention will now be described in more detail, with reference to the appended drawings showing a currently preferred embodiment of the invention, wherein:
Fig 1 schematically shows a level measuring system comprising a radar level gauge system according to a first example embodiment of the present invention;
Fig 2 is a block diagram schematically illustrating the radar level gauge system in fig 1;
Fig 3 schematically illustrates the radar level gauge system in fig 1 with a propagation device in the form of an extended antenna inside the tubular mounting structure;
Fig 4 schematically illustrates a radar level gauge system according to a second example embodiment of the present invention in fig 1 with a propagation device in the form of a modular coaxial transmission line probe;
Figs 5a-c schematically illustrate a first example configuration of the connection between two propagation device parts;
Figs 6a-c schematically illustrate a second example configuration of the connection between two propagation device parts;
Fig 7 is a block diagram schematically illustrating an installation method according to an embodiment of the present invention; and
Figs 8a-e are schematic illustrations of the method according to fig 7.

### Detailed Description of Example Embodiments of the Invention

In the present detailed description, various embodiments of the radar level gauge system according to the present invention are mainly discussed with reference to a battery-powered radar level gauge system with wireless communication capabilities.

It should be noted that this by no means limits the scope of the present invention, which equally well includes, for example, radar level gauge systems that are loop-powered or powered with dedicated power lines.

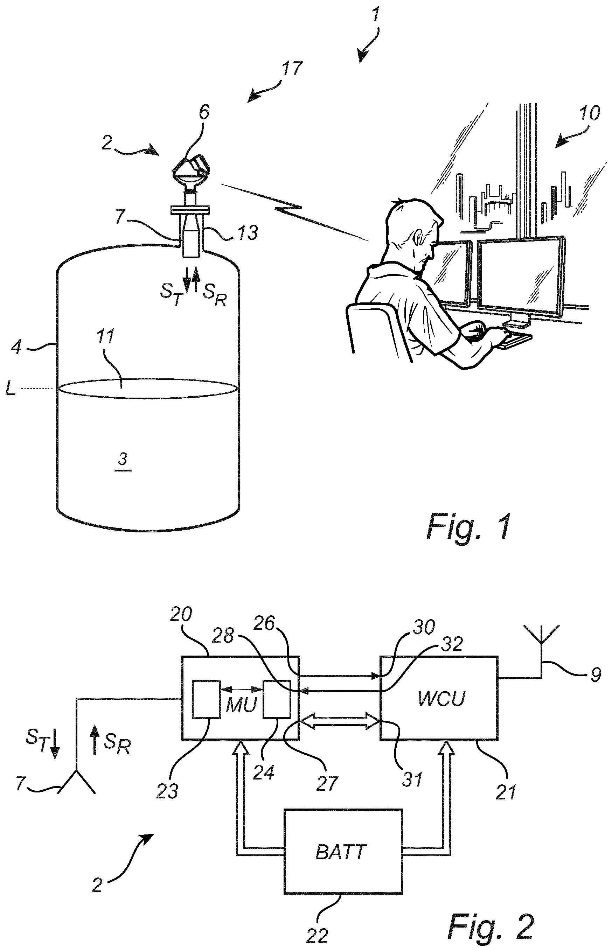

Fig 1 schematically shows a level measuring system 1 comprising a tank arrangement 17 according to an example embodiment of the present invention, and a host system 10 illustrated as a control room.

The exemplary tank arrangement 17 comprises a radar level gauge 2 of non-contacting type and a tank 4 having a tubular mounting structure 13 (often referred to as a "nozzle") extending substantially vertically upwards from the roof of the tank 4.

The radar level gauge 2 is installed to measure the filling level of a product 3 contained in the tank 4. The radar level gauge system 2 comprises a measuring electronics unit 6 arranged outside the tank 4, and a propagation device in the form of an elongated extended antenna 7 for radiating an electromagnetic transmit signal S_{T} in a longitudinal direction of the antenna 7 towards a surface 11 of the product 3 and for returning an electromagnetic reflection signal S_{R} resulting from reflection of the transmit signal S_{T} at the surface 11.

By analyzing the transmit signal S_{T} and the reflection signal S_{R}, the measurement unit 6 can determine the distance between a reference position (such as a feed-through between the outside and the inside of the tank) and the surface 11 of the product 3, whereby the filling level can be deduced.

With reference to fig 2, the radar level gauge system 2 in fig 1 comprises a measurement unit (MU) 20, a wireless communication unit (WCU) 21 and a local energy store in the form of a battery 22. The wireless communication unit 21 may advantageously be compliant with WirelessHART (IEC 62591). As is schematically indicated in fig 2, the MU 20 comprises a transceiver 23 and a measurement processor 24. The transceiver 23 is controllable by the measurement processor 24 for generating, transmitting and receiving electromagnetic signals having frequencies defining a frequency bandwidth, such as 24 GHz to 27 GHz. The measurement processor 24 is coupled to the transceiver 23 for determining the filling level in the tank 4 based on a relation between the transmit signal S_{T} and the reflection signal S_{R}.

As is schematically indicated in fig 2, the measurement unit 20 comprises a first output 26, a second output 27, and a first input 28. The first output 26 is connected to a first input 30 of the wireless communication unit 21 through a first dedicated discreet line, the second output 27 is connected to a second input 31 of the wireless communication unit 21, and the first input 28 is connected to a first output 32 of the wireless communication unit 21 through a second dedicated discreet line. The second output 27 of the measurement unit 20 and the second input 31 of the wireless communication unit 21 may be configured to handle bidirectional data communication according to a serial or a parallel communication protocol to allow exchange of data between the measurement unit 20 and the wireless communication unit 21. The communication between the measurement unit 20 and the wireless communication unit 21 using the different inputs/outputs is described in more detail in US patent application no. 13/537,513, which is hereby incorporated by reference in its entirety.

The above example of a wireless and locally powered configuration is intended to give the skilled person a detailed example of how various aspects and embodiments of the radar level gauge system according to the present invention can be implemented. It should, however, be noted that there are many other ways of powering and interfacing a radar level gauge system. Such other ways are widely accessible to one of ordinary skill in the art and can be implemented without excessive experimentation or undue burden.

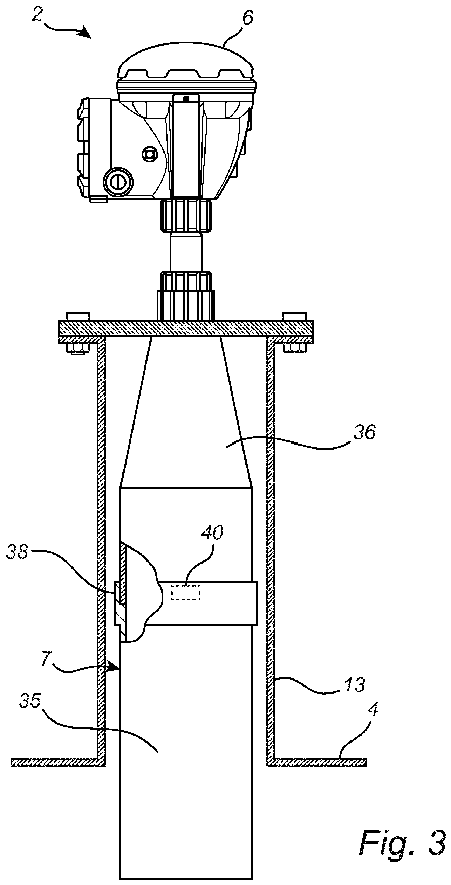

Fig 3 is a schematic illustration of the top portion of a first embodiment of the radar level gauge system 2 in fig 1, with a propagation device in the form of an elongated extended antenna 7 inside the tubular mounting structure 13.

Referring to fig 3, the extended antenna 7 comprises a first propagation device part (in the context of this first embodiment sometimes referred to as a first antenna part or an antenna extension) 35, and a second propagation device part (in the context of this first embodiment sometimes referred to as a second antenna part or an antenna) 36. The first antenna part 35 comprises a cuff portion 38 at an upper end thereof, and a lower end of the second antenna part 36 is inserted in the cuff portion 38 of the first antenna part 35.

The first antenna part 35 and the second antenna part 36 are joined together by at least one fastening arrangement 40 provided at the cuff portion 38 of the first antenna part 35, where there is an overlap between the first antenna part 35 and the second antenna part 36.

In fig 3, the at least one fastening arrangement 40 is schematically indicated by a simple box. To provide for a robust fastening of the antenna extension 35 to the cone antenna 36 of the radar level gauge system 2, the antenna 7 may be provided with several fastening arrangements, which may be distributed circumferentially along the periphery of the antenna 7, in the overlap between the cuff portion 38 of the first antenna part 35 and the end portion of the second antenna part 36.

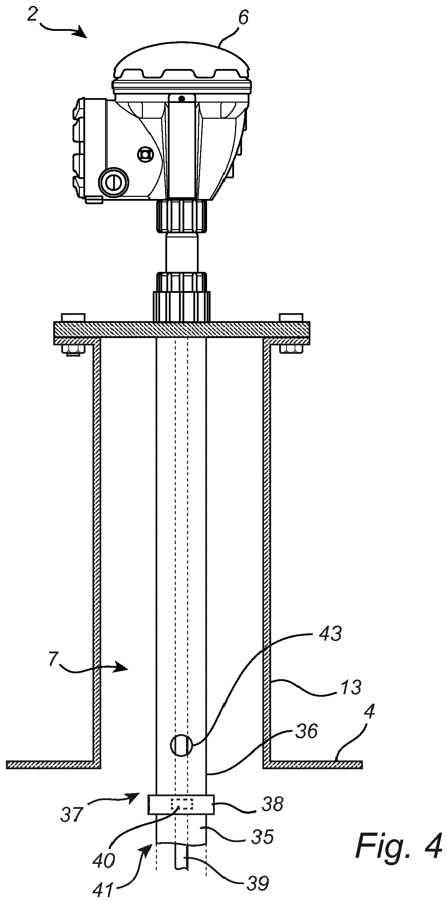

Fig 4 is a schematic illustration of the top portion of a second embodiment of the radar level gauge system 2 in fig 1, with a propagation device in the form of an elongated coaxial transmission line probe 37. Although not explicitly shown in fig 4, it should be understood that the transmission line probe 37 extends towards and into the product in the tank 4, advantageously practically all the way to the bottom of the tank 4. The coaxial transmission line probe 37 comprises an inner conductor 39 and an outer conductor 41. To allow the product level to be the same between the inner conductor 39 and the outer conductor 41 as outside the coaxial transmission line probe 37, the outer conductor 41 is provided with holes 43.

Referring to fig 4, the outer conductor 41 of the elongated coaxial transmission line probe 37 comprises a first propagation device part (in the context of this second embodiment sometimes referred to as a first outer conductor part) 35, and a second propagation device part (in the context of this second embodiment sometimes referred to as a second outer conductor part) 36. The first outer conductor part 35 comprises a cuff portion 38 at an upper end thereof, and a lower end of the second outer conductor part 36 is inserted in the cuff portion 38 of the first outer conductor part 35.

The first outer conductor part 35 and the second outer conductor part 36 are joined together by at least one fastening arrangement 40 provided at the cuff portion 38 of the first outer conductor part 35, where there is an overlap between the first outer conductor part 35 and the second outer conductor part 36.

In fig 4, the at least one fastening arrangement 40 is schematically indicated by a simple box. To provide for a robust interconnection of the first outer conductor part 35 and the second outer conductor part 36 of the radar level gauge system 2, the propagation device (antenna 7 or transmission line probe 37) may be provided with several fastening arrangements, which may be distributed circumferentially along the periphery of the propagation device, in the overlap between the cuff portion 38 of the first propagation device part 35 and the end portion of the second propagation device part 36.

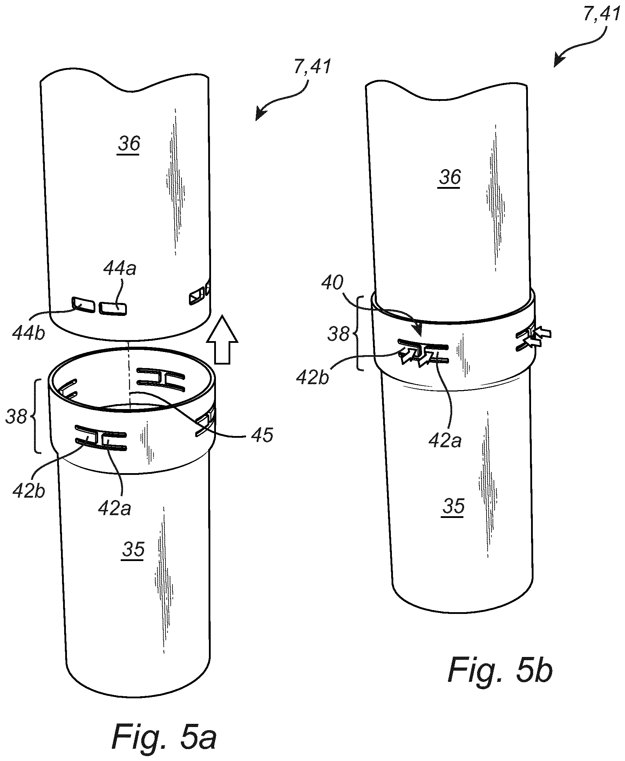

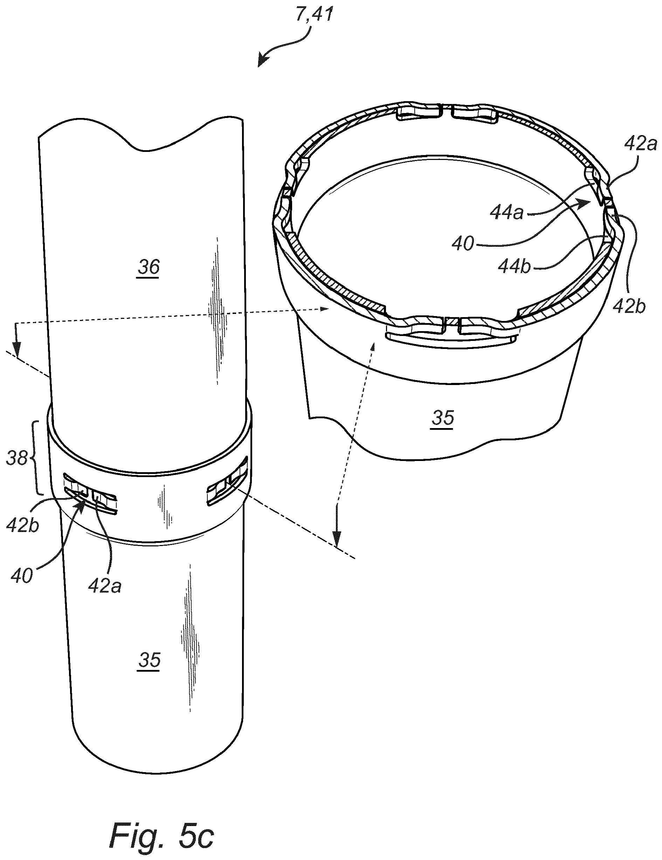

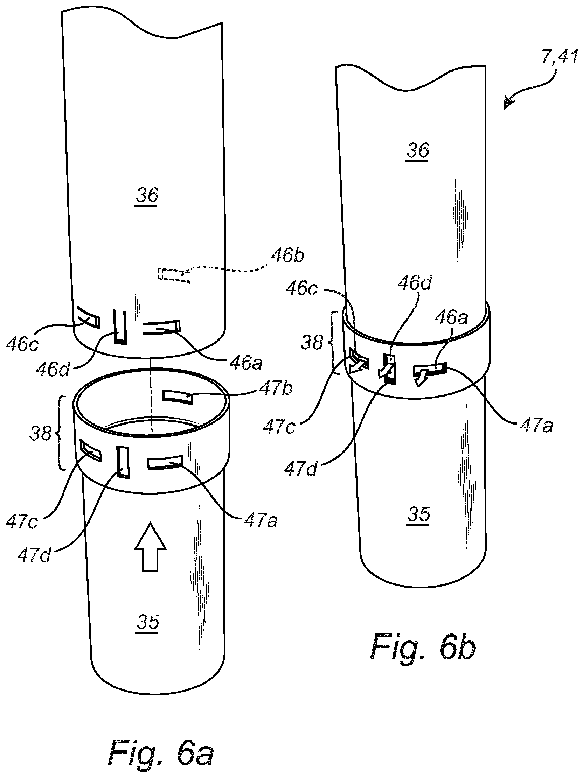

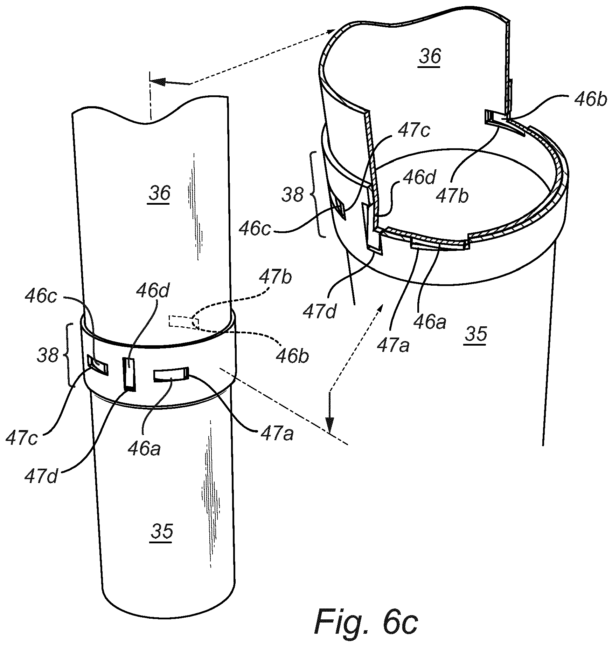

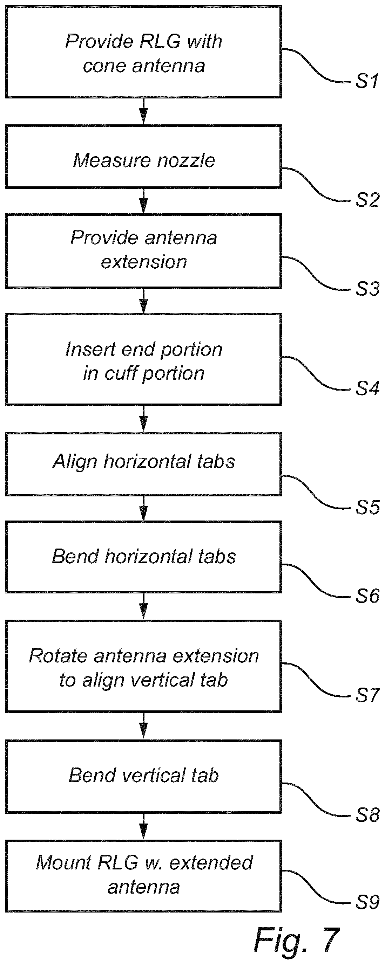

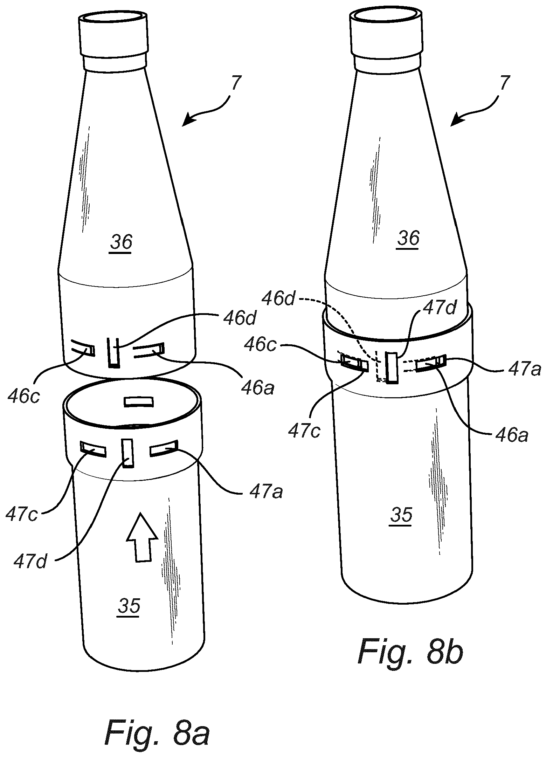

Two different example configurations of the fastening arrangement 40 will be described below with reference to figs 5a-c and figs 6a-c. Thereafter, an example method of installing the above-described first embodiment of the radar level gauge system 2 at the tank 4 will be described with reference to the flow chart in fig 7 and the illustrations in figs 8a-e.

Figs 5a-c schematically illustrate a first example configuration of the propagation device in fig 3 and fig 4. Referring to figs 5a-c, the fastening arrangement 40 comprises tabs 42a-b integrally formed in the first propagation device part 35, and recesses 44a-b integrally formed in the second propagation device part 36. As is schematically shown in figs 5b-c, the first 35 and second 36 propagation device parts are joined together by pushing each tab 42a-b into its corresponding recess 44a-b so that the tabs 42a-b are deformed and interact with the recesses 44a-b to prevent relative movement of the first propagation device part 35 in relation to the second propagation device part 36, at least in a longitudinal direction (along the symmetry axis 45 of the propagation device).

Figs 6a-c schematically illustrate a second example configuration of the propagation device in fig 3 and fig 4. Referring to figs 6a-c, the propagation device according to the second example configuration comprises four fastening arrangements 40a-d distributed along the circumference of the propagation device at the overlap between the first propagation device part 35 and the second propagation device part 36. As is shown in figs 6a-c, each fastening arrangement 40a-d comprises a tab 46a-d integrally formed in the second propagation device part 36, and a recess 47a-d integrally formed in the first propagation device part 35. The tabs 46a-c of the first to third fastening arrangements 40a-c extend along a first peripheral direction, here substantially perpendicular to the longitudinal extension of the elongated propagation device, and the tab 46d of the fourth fastening arrangement 40d extends along a second peripheral direction, here substantially parallel to the longitudinal extension of the elongated propagation device.

An embodiment of the method according to the invention of installing a radar level gauge with an extended elongated antenna at a tank will be described below with reference to the flow-chart in fig 7 and the schematic illustrations in fig 3, fig 6a-c and figs 8a-e.

In a first step S1, a radar level gauge system 2 comprising a measurement electronics unit 6 and a cone antenna 36 is provided.

In a second step S2, the length of the tubular mounting structure (nozzle) 13 is measured.

Thereafter, in a third step S3, an antenna extension 35 is provided, having a length (longitudinal extension) being related to the measured length of the tubular mounting structure 13. The length of the antenna extension 35 will be dependent on the length of the tubular mounting structure 13 and the length of the cone antenna 36, and should be selected such that the extended elongated antenna 7 extends into the tank 4 beyond a lower end of the tubular mounting structure 13, as is schematically indicated in fig 3.

In a fourth step S4, the end portion of the cone antenna 36 is inserted into the cuff portion 38 of the antenna extension 35 as is schematically indicated in fig 8a. The insertion can take place by moving either of the cone antenna 36 and the antenna extension 35, or both simultaneously.

Following insertion of the end portion of the cone antenna 36 into the cuff portion 38 of the antenna extension, the horizontal tabs 46a-c are (in step S5) aligned to the horizontal recesses 47a-c to allow access to each tab 46a-c through its corresponding recess 47a-c, as is schematically shown in fig 8b.

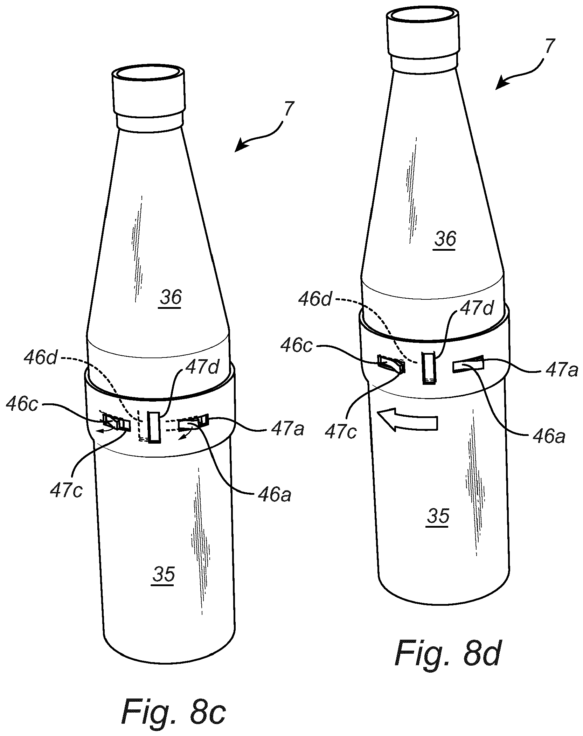

Referring to fig 8c, each of the horizontal tabs 46a-c is then, in the following step S6, deformed (bent) so that the tab is received by its corresponding recess 47a-c. Following this step, relative movement in the longitudinal direction between the cone antenna 36 and the antenna extension 35 is prevented.

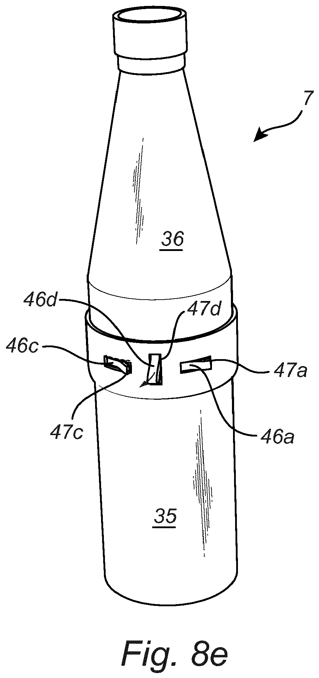

To complete the attachment of the antenna extension 35 to the cone antenna 36, the antenna extension 35 is (in step S7) rotated to align the vertical tab 46d with its corresponding, vertically oriented, recess 47d as illustrated in fig 8d, and (in step S8) the vertical tab 46d is deformed (bent) so that the tab is received by its corresponding recess 47d as illustrated in fig 8e.

Finally, in step S9, the radar level gauge system 2, with the extended antenna 7, is mounted on the tubular mounting structure 13.

The person skilled in the art realizes that the present invention by no means is limited to the preferred embodiments described above. On the contrary, many modifications and variations are possible within the scope of the appended claims.

## Claims

1. A radar level gauge system for determining the filling level of a product in a tank, comprising:
a transceiver for generating, transmitting and receiving electromagnetic signals;
an elongated propagation device connected to said transceiver for propagating an electromagnetic transmit signal in a longitudinal direction of said propagation device towards a surface of the product and for returning an electromagnetic reflection signal resulting from reflection of the electromagnetic transmit signal at the surface back towards said transceiver; and
processing circuitry coupled to said transceiver for determining said filling level based on a relation between said transmit signal and said reflection signal,
wherein said propagation device comprises:
a first propagation device part comprising a cuff portion; and
a second propagation device part comprising an end portion inserted in said cuff portion of the first propagation device part and joined together with said cuff portion by at least a first fastening arrangement,
wherein said first fastening arrangement comprises:
a tab formed in one of said cuff portion of the first propagation device part and said end portion of the second propagation device part; and
a recess formed in the other one of said cuff portion of the first propagation device part and said end portion of the second propagation device part,
said tab being received by said recess to interact with said recess to prevent relative movement between the first propagation device part and the second propagation device part at least in said longitudinal direction.

2. The radar level gauge system according to claim 1, wherein said tab extends along a periphery of said propagation device.

3. The radar level gauge system according to claim 1 or 2, further comprising a second fastening arrangement, peripherally spaced apart from said first fastening arrangement.

4. The radar level gauge system according to claim 3, wherein said second fastening arrangement comprises:
a tab formed in one of said cuff portion of the first propagation device part and said end portion of the second propagation device part; and
a recess formed in the other one of said cuff portion of the first propagation device part and said end portion of the second propagation device part,
said tab being received by said recess to interact with said recess to prevent relative movement between the first propagation device part and the second propagation device part at least in said longitudinal direction.

5. The radar level gauge system according to claim 4, wherein the tab comprised in said second fastening arrangement extends along a periphery of said propagation device.

6. The radar level gauge system according to claim 5, wherein:
the tab comprised in said first fastening arrangement extends along the periphery of said propagation device in a first peripheral direction; and
the tab comprised in said second fastening arrangement extends along the periphery of said propagation device in a second peripheral direction, different from said first peripheral direction.

7. The radar level gauge system according to any one of claims 4 to 6, wherein each of the tab comprised in said first fastening arrangement, and the tab comprised in said second fastening arrangement is formed in said end portion of the second propagation device part.

8. The radar level gauge system according to any one of the preceding claims, wherein said second propagation device part is arranged between said transceiver and said first propagation device part.

9. The radar level gauge system according to any one of the preceding claims, wherein each of said first propagation device part and said second propagation device part is tubular.

10. The radar level gauge system according to any one of the preceding claims, wherein:
said elongated propagation device is an elongated antenna for radiating said transmit signal towards said surface of the product;
said first propagation device part is a first antenna part; and
said second propagation device part is a second antenna part.

11. The radar level gauge system according to claim 10, wherein:
said second antenna part is arranged between said transceiver and said first antenna part; and
said second antenna part comprises a first portion exhibiting an increasing cross-sectional area with increasing distance in said longitudinal direction from said transceiver, and a second portion exhibiting a substantially constant cross-sectional area along a longitudinal extension of said second portion, said first portion being located between said transceiver and said second portion.

12. The radar level gauge system according to claim 11, wherein said end portion of the second antenna part is included in said second portion of the second antenna part.

13. A method of installing a radar level gauge system at a tank having a tubular mounting structure extending vertically upwards from a roof of said tank, said method comprising the steps of:
providing a radar level gauge system including a transceiver for generating, transmitting and receiving electromagnetic signals; and an antenna for radiating electromagnetic signals transmitted by said transceiver;
measuring a distance indicative of a distance from a top end of said tubular mounting structure to a potential source of a disturbance echo;
determining a desired total antenna length based on said measured distance, said desired total antenna length being such that the disturbance echo is substantially eliminated;
determining a desired antenna extension length based on said desired total antenna length and a length of the antenna comprised in said radar level gauge system;
providing an antenna extension having said desired antenna extension length;
attaching said antenna extension to the antenna of said radar level gauge system to form an extended antenna; and
mounting said radar level gauge system, with said extended antenna, on the top end of said tubular mounting structure.

14. The method according to claim 13, wherein said step of attaching comprises the steps of:
partially inserting one of said antenna and said antenna extension into the other one of said antenna and said antenna extension to provide an overlapping portion in which said antenna and said antenna extension overlap; and
deforming one of said antenna and said antenna extension in said overlapping portion to interlock said antenna and said antenna extension through said deformation.

15. The method according to claim 14, wherein:
one of said antenna and said antenna extension comprises a tab in said overlapping portion, and the other one of said antenna extension comprises a recess in said overlapping portion; and
said step of deforming comprises bending said tab in such a way that said tab is received by said recess.
